# EUROPEAN PATENT APPLICATION

(11) **EP 1 582 377 A1**
(43) Date of publication of application: **05.10.2005**
(21) Application number: 04007546.7
(22) Date of filing: 29.03.2004
(51) Int. Cl.: B60B 3/08

(54) **Split wheel rim for an all terrain vehicle**

(71) Applicant: Boahsin Industrial Co., Ltd., Tao-Yuan Hsien (TW)
(72) Inventor: Lee, Yen-Hsiu, Kaohsiung City (TW); Yeh, Yun-Chou, Taipei City (TW)
(74) Representative: Altenburg, Udo

(57) **Abstract**

A wheel rim unit includes first and second rim bodies (31, 32) interconnected fixedly by a plurality of bolts (41) and a plurality of nuts (42). The first and second disks (311, 321) abut against each other. The second disk (321) is formed integrally with a plurality of pressed bushings (324) that define respectively a plurality of holes (323) in the second disk (321) and that extend respectively through a plurality of holes (313) in the first disk (311) so as to position the first and second rim bodies (31, 32) relative to each other. The bolts (41) extend respectively through the holes (313, 323) in each of the first and second disks (31, 32), and engage respectively the nuts (42).

## Description

This invention relates to a wheel rim unit, and more particularly to a wheel rim unit for an all terrain vehicle, which includes first and second rim bodies that are made of aluminum.

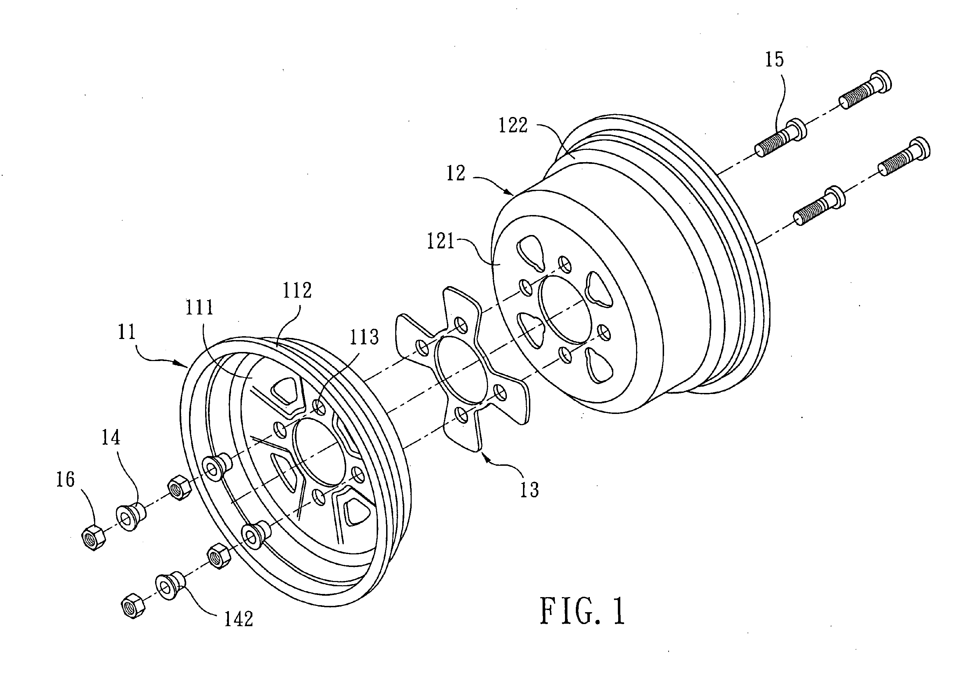

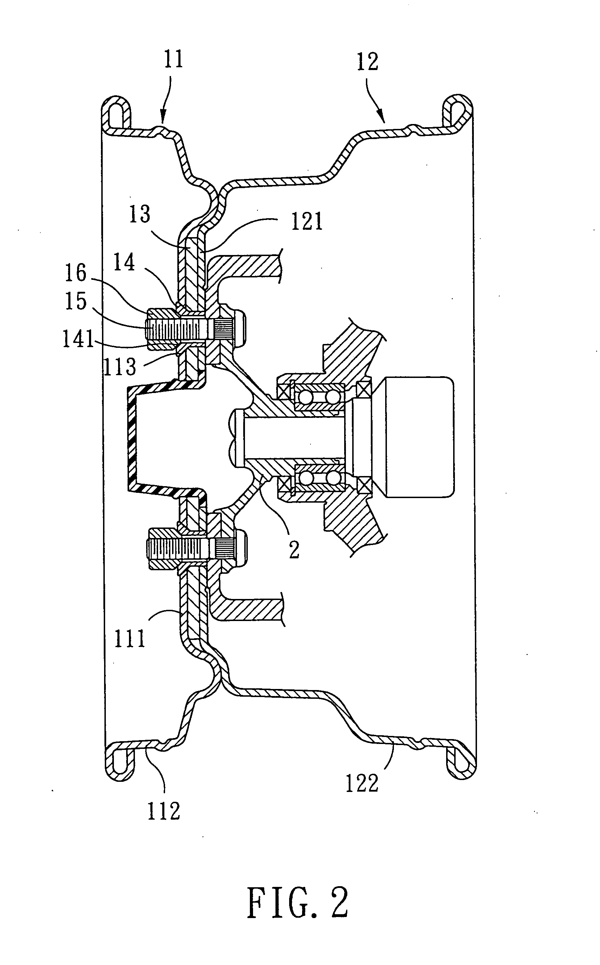

Referring to Figs. 1 and 2, a conventional wheel rim unit for an all terrain vehicle disclosed in U.S. Patent Number 6,340,210 is shown to include a first rim body 11, a second rim body 12, a central plate 13, a plurality of bushings 14, a plurality of bolts 15, and a plurality of nuts 16. Each of the first and second rim bodies 11, 12 includes a disk 111, 121, and an annular extended wall 112, 122 extending from an outer periphery of the disk 111, 121. To lock the first and second rim bodies 11, 12 effectively on a driving shaft 2 of the vehicle, each of the bushings 14 has a frusto-conical end portion that is formed with an annular inclined inner surface 141 abutting against an annular inclined surface of the corresponding nut 16, and an annular inclined outer surface 142 abutting against an annular inclined surface 113 of the disk 111 of the first rim body 11. The above-mentioned conventional wheel rim unit suffers from the following disadvantages:
(1) The disk 111 of the first rim body 11 is relatively thin at the annular inclined surfaces 113, thereby weakening the first rim body 11.
(2) The molding and material costs of the bushings 14 are relatively high.

Therefore, it is the object of this invention to provide a wheel rim unit for an all terrain vehicle, which includes a wheel body having a disk that is formed integrally with a plurality of pressed bushings so that the disk has a comparatively uniform thickness and so as to save the molding and material costs of the bushings.

According to this invention, a wheel rim unit for an all terrain vehicle includes a first rim body, a second rim body, a plurality of bolts, and a plurality of nuts. The first rim body is made of aluminum, and includes a first disk and an annular first extended wall extending from an outer periphery of the first disk. The first disk is formed with a plurality of holes therethrough. The second rim body is made of aluminum, and includes a second disk and an annular second extended wall extending from an outer periphery of the second disk in a direction away from the first rim body. The second disk is formed with a plurality of holes therethrough. The bolts extend respectively through said holes in each of the first and second rim bodies. The nuts engage respectively the bolts so as to interconnect the first and second rim bodies fixedly. The first and second disks abut against each other. The second disk is formed integrally with a plurality of pressed bushings that define respectively the holes in the second disk and that extend respectively through the holes in the first disk so as to position the first and second rim bodies relative to each other.

These and other features and advantages of this invention will become apparent in the following detailed description of the preferred embodiments of this invention, with reference to the accompanying drawings, in which:
Fig. 1 is an exploded perspective view of a conventional wheel rim unit for an all terrain vehicle;
Fig. 2 is a sectional view of the conventional wheel rim unit;
Fig. 3 is an exploded perspective view of the first preferred embodiment of a wheel rim unit for an all terrain vehicle according to this invention;
Fig. 4 is a sectional view of the first preferred embodiment; and
Fig. 5 is a fragmentary sectional view of the second preferred embodiment of a wheel rim unit for an all terrain vehicle according to this invention.

Before the present invention is described in greater detail in connection with the preferred embodiments, it should be noted that similar elements and structures are designated by like reference numerals throughout the entire disclosure.

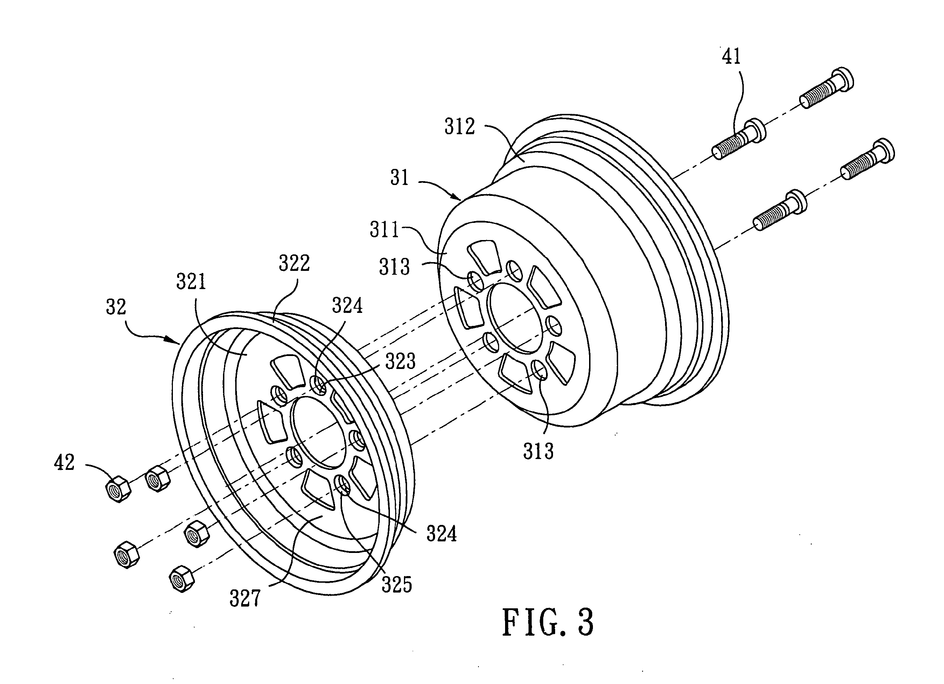

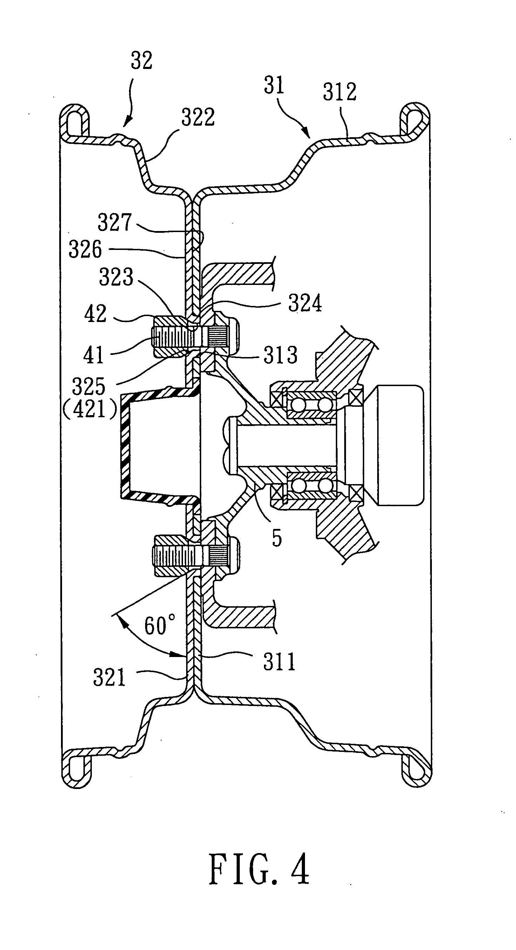

Referring to Figs. 3 and 4, the first preferred embodiment of a wheel rim unit for an all terrain vehicle according to this invention is shown to include first and second rim bodies 31, 32, a plurality of bolts 41, and a plurality of nuts 42. The first and second rim bodies 31, 32 are connected fixedly to a driving shaft 5 of the vehicle by the bolts 41 and the nuts 42. A tire (not shown) is sleeved on the first and second rim bodies 31, 32.

The first rim body 31 is made of aluminum, and includes a first disk 311 and an annular first extended wall 312 extending from an outer periphery of the first disk 311. The first disk 311 has a thickness of about 3 mm, and is formed with a plurality of holes 313 therethrough.

The second rim body 32 is made of aluminum, and includes a second disk 321 abutting against the first disk 311, and an annular second extended wall 322 extending from an outer periphery of the second disk 321 in a direction away from the first rim body 31. The second disk 321 has a thickness of about 3 mm, a plurality of holes 323 formed therethrough, and a plurality of pressed bushings 324 formed integrally therewith and defining respectively the holes 323. The bushings 324 extend respectively through the holes 313 in the first disk 311 so as to position the first and second rim bodies 31, 32 relative to each other. Each of the bushings 324 is formed with an annular inclined surface 325 at an end thereof. The second disk 321 further has an outer side surface 326 and an inner side surface 327 opposite to the outer side surface 326 and abutting against the first disk 311. The annular inclined surface 325 of each of the bushings 324 is adjacent to the outer side surface 326 of the second disk 321, and forms an angle of about 60° with the outer side surface 326, as shown in Fig. 4.

The bolts 41 extend respectively through the holes 313, 323 in each of the first and second rim bodies 31, 32, and engage respectively the nuts 42 so as to interconnect the first and second rim bodies 31, 32 fixedly.

Each of the nuts 42 is formed with an annular inclined surface 421 abutting against the annular inclined surface 325 of a corresponding one of the bushings 324.

As such, the wheel rim unit of this invention has the following advantages:
1. The thickness of the second disk 321 is relatively uniform even at locations adjacent to the bushings 324 so that the strength of the second rim body 32 can be increased, as compared to that of the prior art shown in Figs. 1 and 2.
2. Because the bushings 324 are formed integrally with the second disk 321, the manufacturing costs of the rim wheel unit are reduced significantly.

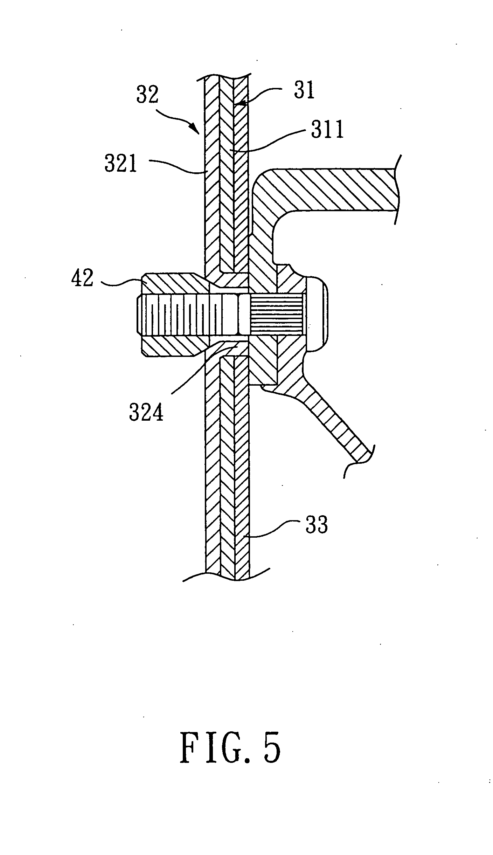

Referring to Fig. 5, a reinforcing plate 33 can be added when the air pressure in the tire (not shown) is comparatively high. The bolts 41 extend through the reinforcing plate 33. The first disk 311 is clamped between the second disk 321 and the reinforcing plate 33 so as to facilitate firm connection between the first and second rim bodies 31, 32.

## Claims

1. A wheel rim unit for an all terrain vehicle, including:
a first rim body (31) made of aluminum and including a first disk (311) and an annular first extended wall (312) extending from an outer periphery of the first disk (311), the first disk (311) being formed with a plurality of holes (313) therethrough;
a second rim body (32) made of aluminum and including a second disk (321) and an annular second extended wall (322) extending from an outer periphery of the second disk (321) in a direction away from the first rim body (31), the second disk (321) being formed with a plurality of holes (323) therethrough;
a plurality of bolts (41) extending respectively through said holes (313, 323) in each of the first and second rim bodies (31, 32); and
a plurality of nuts (42) engaging respectively the bolts (41) so as to interconnect the first and second rim bodies (31, 32) fixedly;
**characterized in that** the first and second disks (311, 321) abut against each other, the second disk (321) being formed integrally with a plurality of pressed bushings (324) that define respectively the holes (323) in the second disk (321) and that extend respectively through the holes (313) in the first disk (311) so as to position the first and second rim bodies (31, 32) relative to each other.

2. The wheel rim unit as claimed in Claim 1, further **characterized in that** the second disk (321) has an inner side surface (327) abutting against the first disk (311), and an outer side surface (326) opposite to the inner side surface (327), each of the bushings (324) being formed with an annular inclined surface (325) at an end thereof adjacent to the outer side surface (326), each of the nuts (42) being also formed with an annular inclined surface (421) abutting against the annular inclined surfaces (325) of a corresponding one of the bushings (324).

3. The wheel rim unit as claimed in Claim 2, further **characterized in that** the annular inclined surfaces (325) of each of the bushings (324) forms an angle of about 60° with the outer side surface (326) of the second disk (321).

4. The wheel rim unit as claimed in Claim 1, **characterized by** a reinforcing plate (33), the bolts (41) extending through the reinforcing plate (33), the first disk (311) being clamped between the second disk (321) and the reinforcing plate (33).
